Europäisches Patentamt

European Patent Office

Office européen des brevets

(19)

(11) Publication number: **0 285 397 B1**

# EUROPEAN PATENT SPECIFICATION

(12)

(45) Date of publication of patent specification: **28.10.92**

(51) Int. Cl.⁵: **H01S 3/105**, H01S 3/08, H01S 3/07

(21) Application number: **88302844.1**

(22) Date of filing: **30.03.88**

(54) **Cube corner polarizer.**

(30) Priority: **03.04.87 US 34342**
**31.03.87 US 33093**

(43) Date of publication of application:
**05.10.88 Bulletin 88/40**

(45) Publication of the grant of the patent:
**28.10.92 Bulletin 92/44**

(84) Designated Contracting States:
**DE FR GB**

(56) References cited:
**GB-A- 2 184 595**
**US-A- 3 866 140**
**US-A- 4 050 035**

**PATENT ABSTRACTS OF JAPAN, vol. 7, no. 276 (E-215)[1421], 9th December 1983; & JP-A-58 155 785 (MATSUSHITA DENKI SANGYO K.K.) 16-09-1983**

(73) Proprietor: **Spectra-Physics Inc.**
**3333 North First Street**
**San Jose California 95134-1995(US)**

(72) Inventor: **Koop, Dale E**
**655 South Fair Oaks Avenue Apt N214**
**Sunnyvale CA 94086(US)**

(74) Representative: **Stoner, Gerard Patrick et al**
**Mewburn Ellis 2 Cursitor Street**
**London EC4A 1BO(GB)**

## Description

BACKGROUND OF THE INVENTION

This invention relates to a laser of the kind having a three-surface retroreflector.

The invention relates particularly to methods and apparatus for producing preferential polarization of the output light beam from a laser of the kind having a three-surface retroreflector.

When the output beam of a laser is used for cutting, the output light beam needs to be linearly polarized. This is an application's requirement. Linearly polarized light comes out at 45 degrees and is put through a quarter wave plate which makes circularly polarized light so that the light beam can cut steel or metal in both the X and Y directions with equal efficiency.

If the output light beam is randomly polarized, the light beam will produce different cut qualities when cutting contours.

By circularly polarizing the light, the same cutting efficiency is obtained no matter what direction the contour is being cut.

To get circularly polarized light, linearly polarized light is used as a starting point and is put through a special optic. So the laser needs to have linearly polarized light coming out of it.

One way of producing linearly polarized light at the output of a laser is to use a fold mirror mounted at 45 degrees within the path of the light beam resonating in the laser cavity. This produces polarization because the S and P reflectivities are enough different to cause the light to go into one mode, which is the highest efficiency, the least losses. In this polarization mode the polarization vector is in the plane of the maximum reflection of the S and P reflectivities.

Using an extra mirror in association with the laser cavity in this way requires extra structure and involves greater optical complexity because of the addition of the extra mirror.

It is a primary object of the present invention to produce preferential polarization of the output light beam from a laser of the kind having a three-surface retroreflector in a way that avoids the problems and complexity of methods and apparatus used in the prior art.

It is a related, important object of the present invention to obtain preferential polarization of the output light beam from a laser of the kind having a three-surface retroreflector without having to use an extra mirror.

In the method and apparatus of the present invention preferential polarization is produced by mounting three reflecting surfaces of a retroreflector so that the surfaces are orthogonal in the retroreflector assembly. The preferential polarization is obtained by controlling the combined effect of the orientation of the retroreflector assembly with respect to the axes of the laser beam and the selecting of coatings on the three reflecting surfaces.

In the prior art, US-A-4050035 describes a laser apparatus which has a adjustable position cube-corner reflector to reflect polarised light. The light beam arrives at the cube corner reflector already polarised by the laser source (a solid state laser, or gas laser with a Brewster window attachment) and the reflector is swivelled around the beam axis without tilting out of parallel therewith, to ensure that it sends the beam back with the same polarisation angle.

In a first aspect of the present invention, we provide a method of inducing preferential polarization in the output light beam of a laser that uses a three-surface retroreflector with three orthogonal reflection surfaces,

characterised in that

the preferential polarization is established by the retroreflector using

(i) a selected combination of the respective materials of the three reflection surfaces,

and/or

(ii) a selected alignment of the three-surface retroreflector relative to the axis of the light beam.

In a second aspect, we provide laser apparatus comprising means for inducing preferential polarization in the output light beam of a laser, in which the means for inducing said polarization comprise a three-surface retroreflector with three mutually-orthogonally disposed reflection surfaces which

(i) is aligned relative to the axis of the light beam,

and/or

(ii) has various surface materials of the respective reflection surfaces;

to establish the polarization in the beam.

In a preferred embodiment of the present invention the retroreflector or cube corner is oriented in a symmetrical fashion such that the angle of incidence of light at each reflecting surface is identical and is approximately 54.6 degrees. Two of the reflecting surfaces are enhanced with dielectric layers such that their differential reflectivities are minimized. The surface of the third reflecting surface is coated such that its differential reflectivity is maximized and is significiently different from the other two reflecting surfaces.

In a specific embodiment for a carbon dioxide laser silicon substrate mirrors are used and each mirror has a reflecting layer of silver. Two of the mirrors are enhanced with layers of ZnSe, and all three are protected with ThF coatings. The enhanced mirrors have S and P reflectivities of 0.998 and 0.993, and the third mirror has S and P reflectivities of 0.996 and 0.984 providing a differential reflectivity of about 1 percent, which is enough to preferentially polarize the circulating light and to produce linearly polarized light in the outlet beam of the laser.

The two resonating mirrors are mounted in close proximity and by a common, rigid member so that the combination of the unitary cube corner and resonating mirror mounting system provides optical stability without the need for auxiliary mechanical structure.

## BRIEF DESCRIPTION OF THE DRAWINGS:

Figure 1 is a side elevation view of a laser having a three-mirror cube corner structure which provides a folded light path and which incorporates a polarization scheme effective to produce linearly polarized light at the outlet of the laser in accordance with one embodiment of the present invention.

Figure 2 diagrammatically illustrates the way that the three-mirror cube corner provides a folded light path for the laser shown in Figure 1.

Figure 3 is an enlarged, isometric view showing details of the end mirrors and related mirror mounting plates for the laser shown in Figure 1.

Figure 4 is an enlarged, isometric view showing details of the end mirrors and related mirror mounting plates for the laser shown in Figure 1.

Figure 5 is a graph showing the relationship of substrate reflectivity for mirrors used in one embodiment of the present invention.

Figure 6 is a graph showing a relationship of reflectivity versus angle for mirrors used in one embodiment of the present invention.

Figure 7 is a graph showing a relationship of reflectance versus angle of incidence for visible light for mirrors coated with silver and for mirrors coated with gold.

## DETAILED DESCRIPTION OF THE EMBODIMENTS:

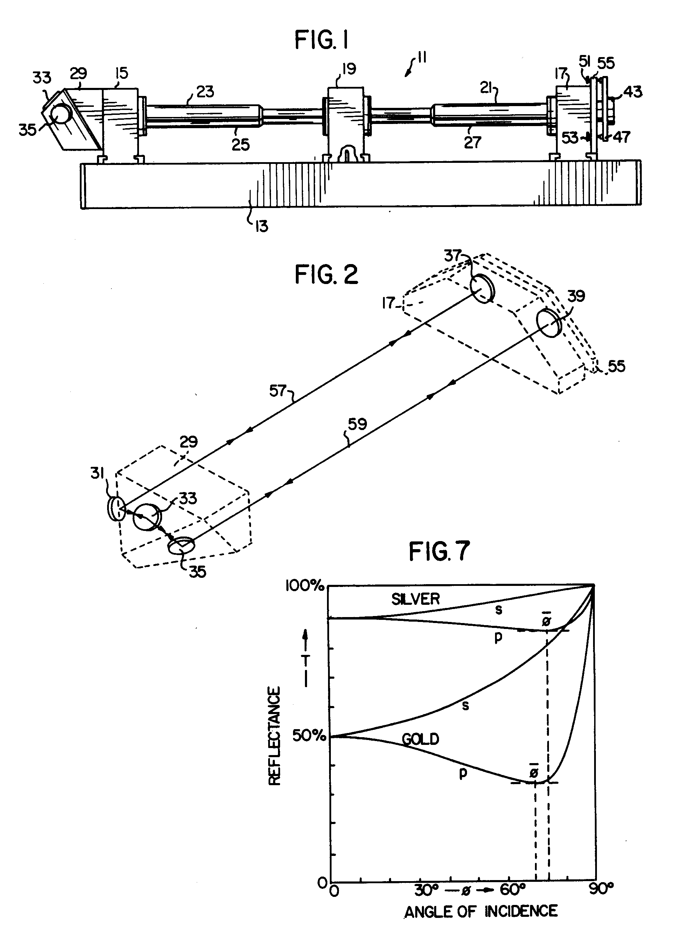

Figure 1 is a side elevation view of a laser, indicated generally by the reference numeral 11, having a three-mirror cube corner structure which provides a folded light path and which incorporates a polarization scheme effective to produce linearly polarized light at the outlet of the laser in accordance with one embodiment of the present invention.

The laser 11 includes a strong, rigid base support 13 and three mounting blocks 15, 17 and 19 which mount component parts of the active laser on the base 13. The blocks are mounted on the base support 13 by precision bores and related dowel pin structures.

The laser 11 illustrated in Figure 1 is a flowing gas laser.

In one specific embodiment of the present invention the laser is a carbon dioxide laser having four axial flow tubes 21, 23, 25 and 27.

The carbon dioxide gas flows axially through the tubes 21-27 in the way described in U.S. Patent 4,709,372 by Joseph F. Rando, et al. and entitled "Fast Axial Flow Laser Circulating System". The laser 11 shown in Figure 1 is also generally like that shown in U.S. Patent 4,672,620 by Robert B. Slusher, et al. and entitled "Fast Axial Flow Carbon Dioxide Laser".

With continued reference to Figure 1 the blocks 15 and 17 provide inlet manifolds for conducting flowing gas to the inlet ends of the tubes 21, 23, 25 and 27, and the block 19 provides an exhaust manifold for conducting blowing gas from the outlet ends of the tubes 21-27. The pump or blower and related conduit structure for cooling and circulating the blowing gas is not illustrated in Figure 1, but is shown in co-pending European application EP-A-0 285 398.

A retroreflector or cube corner 29 is mounted on the block 15.

In one specific embodiment the cube corner 29 is mounted on the block 15 by precision bores and related dowel pins.

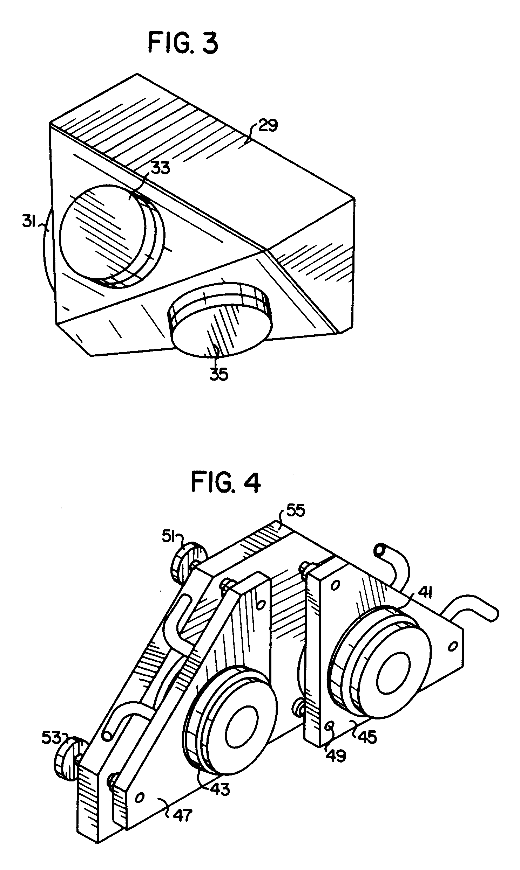

As best illustrated in Figures 2 and 3, the retroreflector 29 has three reflecting mirrors 31, 33 and 35. The reflecting surfaces of these mirrors are orthogonal.

As will be described in more detail below, the retroreflector 29 can be mounted on the mounting block 15 in a way such that the cube corner is oriented in a symmetrical fashion such as the angle of incidence of light at each reflecting surface is identical and is approximately 54.6 degrees. This is the orientation which is illustrated in Figure 1.

Alternatively, as will be described in more detail below, the retroreflector or cube corner 29 can be rotated about either its vertical axis or its horizontal axis or about both axes, to cause a difference between the angles of incidence of the light on the respective reflecting surfaces and to cause a resulting preferred polarization of the output light of the laser 11, and is mounted on the block at that orientation.

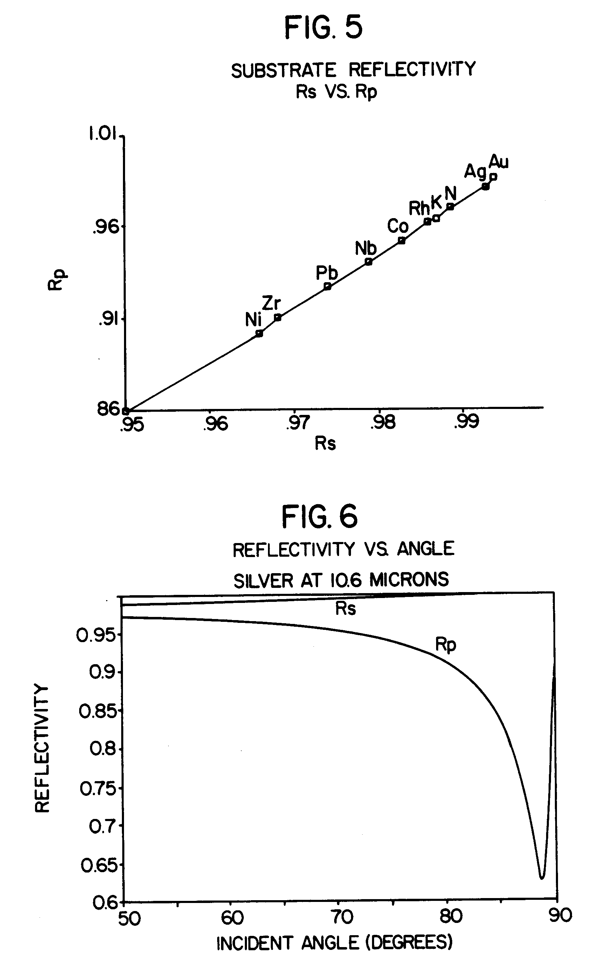

As best illustrated in Figures 2 and 4, the laser 11 has two end or resonating mirrors 37 and 39 mounted in respective lens mounts 41 and 43. As best shown in Figure 4, the lens mounts 41 and 43 are installed in tilt plates 45 and 47. Each of the tilt plates 45 and 47 is adjusted by means of a fixed pivot 49 and two adjustment screws 51 and 53. All of the tilt adjustment screws are threaded within a common base plate 55, and the lens mounts 41 and 43 and the associated resonating mirrors 37 and 39 (see Figure 2) are therefore mounted in close proximity by a common unitary plate 55. This provides excellent optical stability with simple mechanical structure.

As best illustrated in Figure 2, the retroreflector 29 provides a folded light path having a beam 57 within the tubes 25 and 27 and a beam 59 within the tubes 21 and 23. The two light beams 57 and 59 are maintained parallel by the cube corner 29 and are insensitive to the movement of the cube corner.

The cube corner, in combination with the mounting of the two resonator mirrors by a single plate 55 provide an improved configuration of an optically stable laser cavity. The optical stability is obtained without the need for auxiliary mechanical structure. The cube corner 29, as noted above, maintains the beams 57 and 59 parallel because the laser is insensitive to the movement of the cube corner. The resonator mirrors are maintained parallel to each other by being mounted in close proximity and on the same plate 55. The plate 55 is always at one temperature and is not going to distort.

The present invention is also directed to producing preferential polarization of the output light beam from the laser, and in particular linear polarization. Linearly polarized light, when put through a quarter wave plate, makes circularly polarized light so that the light beam can be used to cut steel or metal in both the X and Y directions with equal efficiency.

If the output light beam is randomly polarized, there will be different cut qualities produced when the light is used to cut contours. By making the light circularly polarized, the same cutting efficiency is produced, no matter what direction is involved in cutting a contour.

The present invention produces preferential polarization of the output light from the laser 11 without the need to use an additional mirror mounted at 45 degrees with respect to the axis of the light beams 57 and 59.

The polarization of reflected light is dependent upon the proportion of light reflected at a mirror surface. The proportion of light reflected at a mirror surface depends on the angle of incidence and upon the orientation of the polarization vector with respect to the plane of incidence. In particular the reflectivity for light polarized within the plane of incidence, (P Polarized) is different than the reflectivity of light polarized normal to the plane (S Polarized). In general all light rays can be considered as superpositions of S and P waves. The total reflectivity will be a function of the superposition. The difference in reflectivity for S and for P waves is the differential reflectivity.

The differential reflectivity is a function of the angle of incidence and of the material comprising the mirror surface. This is illustrated in Figure 7 for visible light and for two different materials, silver and gold, comprising the mirror surface. See also Figure 5 which is a plot of substrate reflectivity or $R_s$ versus $R_p$ for different materials.

See also Figure 7 which is a plot of reflectivity versus angle for silver at light having a 10.6 microns wavelength.

In a specific preferred embodiment of the present invention, the cube corner 29 is oriented in a symmetrical fashion such that the angle of incidence of light at each surface is identical and is approximately 54.6 degrees. Two of the reflecting surfaces of the mirrors in the cube corner are enhanced with layers of ZnSe, and all three mirrors are protected with ThF coatings. The enhanced mirrors have S and P reflectivities of 0.998 and 0.993, and the third mirror has S and P reflectivities of 0.996 and 0.984 providing a differential reflectivity of about 1%, which is enough to preferentially polarize the circulating light.

This produces linearly polarized light in the output light beam of the laser 11.

In another embodiment the cube corner 29 can be oriented (about its horizontal and/or vertical axes,) such that the differential reflectivities of each of the three mirrors 31, 33 and 35 produce an overall differential reflectivity in the laser cavity to cause a preferential polarization of the circulating light.

In summary on the polarization scheme, the orientations of the mirrors and their coatings affect what direction the polarization vector will be, so it is possible to utilize either the orientations of the mirrors or the coatings, or a combination of orientations and coatings, to control that. This can be done in any number of ways as long as the superposition (or combined effect) add up to what is wanted.

In most cases, the practical method is to have two mirrors that are identical with very little polarizing effect and one mirror with the polarizing effect. The polarizing effect can be produced either by position or by coating. The one mirror can then be considered as doing all the work, and the other two mirrors can be considered just to be spectators, so far as producing preferential polarization is concerned.

In the cube corner laser construction shown in Figure 1, it is usually simpler to make all of the mirror positions of the cube corner symmetrical and to change the coating on one mirror with respect to the coatings on the other two mirrors. Two of the mirrors may, for example, have enhanced coatings which tend to minimize the splitting between the S and P reflectivities, and the third mirror may have a different coating which produces enough splitting between the S and P reflectivities to control the polarization and to produce the polarization in the plane determined by that mirror.

As noted above, the preferential polarization can also be obtained by rotation of the cube corner 29 about either or both its vertical and horizontal axes.

The preferential polarization can also be obtained by a combination of mirror positioning and coatings. The resulting, preferred polarization can be determined by vector algebra by determining the superposition of all the reflectivities. The calculations involved can become complex when the three mirror positions are not symmetrical and can become even more complex when the three mirror positions are not symmetrical and there is also a difference in the coatings.

Stated generally, in this invention the orientation of the retroreflector assembly relative to the axes of the laser beam and/or the materials of the reflecting surfaces are arranged so as to give preferential polarization.

## Claims

1. A method of inducing preferential polarization in the output light beam of a laser that uses a three-surface retroreflector (29) with three orthogonal reflection surfaces (31,33,35),
   characterised in that
   the preferential polarization is established by the retroreflector (29) using
   (i) a selected combination of the respective materials of the three reflection surfaces (31,33,35), and/or
   (ii) a selected alignment of the three-surface retroreflector (29) relative to the axis of the light beam.

2. A method according to claim 1 in which the retroreflector (29) is aligned to produce an angle of incidence of the light beam on one said reflection surface different from the angles of incidence at the other reflection surfaces.

3. A method according to claim 2 in which the incidence angles of the light beam on two of the reflection surfaces are substantially the same, and the incidence angle on the third surface is sufficiently different therefrom to induce the polarization.

4. A method according to any one of the preceding claims in which two of the reflection surfaces (31,33,35) are of substantially the same material, and the third is of a different material.

5. A method according to claim 1 including both providing various materials of the respective reflection surfaces (31,33,35) and also arranging various respective angles of incidence thereon.

6. A method according to any one of the preceding claims in which the achieved polarization is governed by the material of, and/or incidence angle at, one of the three reflection surfaces (31,33,35).

7. A method according to any one of the preceding claims in which the preferential polarization is linear polarization.

8. A method according to claim 1 in which the angle of incidence of the light beam on each of the three reflection surfaces (31,33,35) is identical (about 54.6°), two of said surfaces being of material having relatively low S and P differential reflectivities, and the third said surface being of material having a relatively high S and P differential reflectivity.

9. A method according to any one of the preceding claims in which the laser is a flowing gas laser.

10. Laser apparatus comprising means for inducing preferential polarization in the output light beam of a laser, in which the means for inducing said polarization comprise a three-surface retroreflector (29) with three mutually-orthogonally disposed reflection surfaces (31,33,35) which
    (i) is aligned relative to the axis of the light beam,
       and/or
    (ii) has various surface materials of the respective reflection surfaces (31,33,35);
       to establish the polarization in the beam.

11. Apparatus according to claim 10 in which the retroreflector (29) is mounted so as to be tiltable relative to the incident light beam direction, to cause difference among the angles of incidence of the light beam on the reflection surfaces (31,33,35).

12. Apparatus according to claim 10 or claim 11 in which the angles of incidence of the light beam on two of the reflection surfaces are the same, and the angle of incidence on the third reflection surface is different from them.

13. Apparatus according to any one of claims 10 to 12 in which the reflection surfaces (31,33,35) comprise coatings.

14. Apparatus according to any one of claims 10 to 13 in which the materials of two of the reflection surfaces are the same, and different from the material of the third reflection surface.

15. Apparatus according to claim 10 in which the angles of incidence of the light beam on the three reflection surfaces (31,33,35) are identical (about 54.6°), two of the surfaces being of material having relatively low S and P differential reflectivities, and the third said surface being of material having relatively high S and P differential reflectivity.

16. Apparatus according to claim 15 in which the laser is a carbon dioxide laser, each of the reflection surfaces (31,33,35) comprises a layer of silver on a silicone substrate, two of said surfaces have dielectric layers of ZnSe and all three surfaces are protected with TrF coatings.

17. Apparatus according to claim 16 in which the two surfaces having the ZnSe layers have S and P reflectivities of 0.998 and 0.993, and the other surface has S and P reflectivities of 0.996 and 0.984 to give a differential reflectivity of about 1%.

18. Apparatus according to any one of claims 10 to 17 in which the laser is a flowing gas laser.

19. Apparatus according to any one of claims 1 to 18 comprising two resonating mirrors (37,39) in addition to the three-surface retroreflector (29), the two resonating mirrors (37,39) being mounted in close proximity on a common base plate (55) to provide optical stability.

**Patentansprüche**

1. Verfahren zum Herbeiführen von bevorzugter Polarisierung im Ausgangslichtstrahl eines Lasers, bei dem ein Drei-Oberflächen-Retroreflektor (29) mit drei orthogonalen Reflexionsoberflächen (31, 33, 35) verwendet wird, dadurch gekennzeichnet, daß die bevorzugte Polarisierung durch den Retroreflektor (29) erzeugt wird, wobei
(i) eine gewählte Kombination der jeweiligen Materialien der drei Reflexionsoberflächen (31, 33, 35) und/oder
(ii) eine gewählte Ausrichtung des Drei-Oberflächen-Retroreflektors (29) bezogen auf die Achse des Lichtstrahls verwendet wird.

2. Verfahren nach Anspruch 1, worin der Retroreflektor (29) so ausgerichtet ist, daß er einen Einfallswinkel des Lichtstrahls auf einer der genannten Reflexionsoberflächen erzeugt, der sich von den Einfallswinkeln auf den anderen Reflexionsoberflächen unterscheidet.

3. Verfahren nach Anspruch 2, worin die Einfallswinkel des Lichtstrahls auf zwei der Reflexionsoberflächen im wesentlichen gleich sind, und der Einfallswinkel auf der dritten Oberfläche sich davon ausreichend unterscheidet, um die Polarisierung herbeizuführen.

4. Verfahren nach einem der vorhergehenden Ansprüche, worin zwei der Reflexionsoberflächen (31, 33, 35) aus im wesentlichen dem gleichen Material bestehen und die dritte aus einem anderen Material besteht.

5. Verfahren nach Anspruch 1, umfassend sowohl das Vorsehen verschiedener Materialien der jeweiligen Reflexionsoberflächen (31, 33, 35) und auch das Anordnen verschiedener jeweiliger Einfallswinkel darauf.

6. Verfahren nach einem der vorhergehenden Ansprüche, worin die erreichte Polarisierung durch das Material von und/oder den Einfallswinkel auf einer der drei Reflexionsoberflächen (31, 33, 35) bestimmt wird.

7. Verfahren nach einem der vorhergehenden Ansprüche, worin die bevorzugte Polarisierung eine lineare Polarisierung ist.

8. Verfahren nach Anspruch 1, worin der Einfallswinkel des Lichstrahls auf jeder der drei Reflexionsoberflächen (31, 33, 35) identisch ist (etwa 54,6°), wobei zwei der genannten Oberflächen aus Material bestehen, das relativ geringe S- und P-Differenz- bzw. Differentialreflexionskräfte aufweist, und die dritte genannte Oberfläche aus Material besteht, das eine relativ hohe S- und P-Differenz- bzw. Differentialreflexionskraft aufweist.

9. Verfahren nach einem der vorhergehenden Ansprüche, worin der Laser ein Fließgaslaser ist.

10. Laservorrichtung umfassend Mittel zum Herbeiführen von bevorzugter Polarisierung im Ausgangslichtstrahl eines Lasers, worin die Mittel zum Herbeiführen der genannten Polarisierung einen Drei-Oberflächen-Retroreflektor (29) mit drei zueinander orthogonal angeordneten Reflexionsoberflächen (31, 33, 35) umfassen, die

(i) relativ zur Achse des Lichstrahls ausgerichtet ist,

und/oder

(ii) verschiedene Oberflächenmaterialien der jeweiligen Reflexionsoberflächen (31, 33, 35) aufweist;

um die Polarisierung des Strahls zu erreichen.

11. Vorrichtung nach Anspruch 10, worin der Retroreflektor (29) so montiert ist, daß er bezogen auf die Einfallslichtstrahlrichtung geneigt werden kann, sodaß eine Differenz zwischen den Einfallswinkeln des Lichtstrahls auf den Reflexionsoberflächen (31, 33, 35) verursacht wird.

12. Vorrichtung nach Anspruch 10 oder 11, worin die Einfallswinkel des Lichstrahls auf zwei der Reflexionsoberflächen gleich sind und der Einfallswinkel auf der dritten Reflexionsoberfläche sich von ihnen unterscheidet.

13. Vorrichtung nach einem der Ansprüche 10 bis 12, worin die Reflexionsoberflächen (31, 33, 35) Beschichtungen umfassen.

14. Vorrichtung nach einem der Ansprüche 10 bis 13, worin die Materialien der zwei der Reflexionsoberflächen gleich sind und sich vom Material der dritten Reflexionsoberfläche unterscheiden.

15. Vorrichtung nach Anspruch 10, worin die Einfallswinkel des Lichtstrahls auf den drei Reflexionsoberflächen (31, 33, 35) identisch sind (etwa 54,6°), wobei zwei der Oberflächen aus Material mit relativ geringen S- und P-Differenz- bzw. Differentialreflexionskräften bestehen und die dritte der genannten Oberflächen aus Material mit relativ hohen S- und P-Differenz- bzw. Differentialreflexionskräften besteht.

16. Vorrichtung nach Anspruch 15, worin der Laser ein Kohlendioxidlaser ist, jede der Reflexionsoberflächen (31, 33, 35) eine Schicht aus Silber auf einem Siliziumsubstrat umfaßt, zwei der genannten Oberflächen dielektrische ZnSe-Schichten aufweisen und alle drei Oberflächen mit TrF-Beschichtungen geschützt sind.

17. Vorrichtung nach Anspruch 16, worin die beiden Oberflächen mit ZnSe-Schichten S- und P-Reflexionskräfte von 0,998 und 0,993 aufweisen und die andere Oberfläche S- und P-Reflexionskräfte von 0,996 und 0,984 aufweist, was eine Differenz- bzw. Differentialreflexionskraft von etwa 1% ergibt.

18. Vorrichtung nach einem der Ansprüche 10 bis 17, worin der Laser ein Fließgaslaser ist.

19. Vorrichtung nach einem der Ansprüche 1 bis 18, umfassend zwei Resonanzspiegel (37,39) zusätzlich zum Drei-Oberflächen-Retroreflektor (29), wobei die beiden Resonanzspiegel (37, 39) in großer Nähe auf der gemeinsamen Basisplatte (55) montiert sind, um optische Stabilität zu bieten.

**Revendications**

1. Méthode d'induction d'une polarisation préférentielle dans le faisceau de lumière à la sortie d'un laser, qui emploie un rétro-réflecteur (29) à trois surfaces avec trois surfaces orthogonales de réflexion (31,33,35),
caractérisée en ce que
la polarisation préférentielle est établie par le rétroréflecteur (29), en utilisant

(i) une combinaison sélectionnée des matériaux respectifs des trois surfaces de réflexion (31,33,35), et/ou

(ii) un alignement sélectionné du rétro-réflecteur à trois surfaces (29) relativement à l'axe du faisceau lumineux.

2. Méthode selon la revendication 1, où le rétro-réflecteur (29) est aligné pour produire un angle d'incidence du faisceau lumineux sur une surface de réflexion, différent des angles d'incidence sur les autres surfaces de réflexion.

3. Méthode selon la revendication 2, où les angles d'incidence du faisceau lumineux sur deux des surfaces de réflexion sont sensiblement les mêmes, et l'angle d'incidence sur la troisième surface en est suffisamment différent pour induire la polarisation.

4. Méthode selon l'une quelconque des revendications précédentes, où deux des surfaces de réflexion (31,33,35) sont sensiblement dans le même matériau et la troisième est en un matériau différent.

5. Méthode selon la revendication 1, consistant à prévoir à la fois divers matériaux des surfaces respectives de réflexion (31,33,35) et à agencer également divers angles respectifs d'incidence.

6. Méthode selon l'une quelconque des revendications précédentes, où la polarisation obtenue est gouvernée par le matériau de et/ou l'angle d'incidence sur l'une des trois surfaces de réflexion (31,33,35).

7. Méthode selon l'une quelconque des revendications précédentes, où la polarisation préférentielle est une polarisation linéaire.

8. Méthode selon la revendication 1, où l'angle d'incidence du faisceau lumineux sur chacune des trois surfaces de réflexion (31,33,35) est identique (environ 54,6°), deux desdites surfaces étant en un matériau ayant des réflectivités différentielles S et P relativement faibles et la troisième surface étant en un matériau ayant une réflectivité différentielle S et P relativement élevée.

9. Méthode selon l'une quelconque des revendications précédentes, où le laser est un laser à gaz en écoulement.

10. Appareil à laser comprenant un moyen pour induire une polarisation préférentielle dans le faisceau de lumière à la sortie d'un laser, où le moyen pour induire ladite polarisation comprend un rétro-réflecteur à trois surfaces (29) avec trois surfaces de réflexion mutuellement orthogonalement disposées (31,33,35), qui
   (i) est aligné relativement à l'axe du faisceau lumineux,
      et /ou
   (ii) a divers matériaux de surface sur les surfaces respectives de réflexion (31,33,35);
      pour établir la polarisation du faisceau.

11. Appareil selon la revendication 10, où le rétro-réflecteur (29) est monté afin de pouvoir être basculé relativement à la direction du faisceau incident de lumière pour provoquer une différence parmi les angles d'incidence du faisceau de lumière sur les surfaces de réflexion (31,33,35).

12. Appareil selon la revendication 10 ou la revendication 11, où les angles d'incidence du faisceau de lumière sur deux des surfaces de réflexion sont identiques, et l'angle d'incidence sur la troisième surface de réflexion en est différent.

13. Appareil selon l'une quelconque des revendications 10 à 12, où des surfaces de réflexion (31,33,35) comprennent des revêtements.

14. Appareil selon l'une quelconque des revendications 10 à 13, où les matériaux de deux des surfaces de réflexion sont les mêmes, et sont différents des matériaux de la troisième surface de réflexion.

ce de réflexion.

15. Appareil selon la revendication 10, où les angles d'incidence du faisceau lumineux sur les trois surfaces de réflexion (31,33,35) sont identiques (environ 54,6°), deux des surfaces étant en un matériau ayant des réflectivités différentielles S et P relativement faibles, et la troisième surface étant en un matériau ayant une réflectivité différentielle S et P relativement élevée.

16. Appareil selon la revendication 15, où le laser est un laser au gaz carbonique, chacune des surfaces de réflexion (31,33,35) comprend une couche d'argent sur un substrat en silicone, deux desdites surfaces ayant des couches diélectriques de ZnSe et les trois surfaces sont protégées par des revêtements de TrF.

17. Appareil selon la revendication 16, où les deux surfaces ayant les couches de ZnSe ont des réflectivités S et P de 0,998 et 0,983, et l'autre surface a des réflectivités S et P de 0,996 et 0,984, pour donner une réflectivité différentielle d'environ 1%.

18. Appareil selon l'une quelconque des revendications 10 à 17, où le laser est un laser à gaz en écoulement.

19. Appareil selon l'une quelconque des revendications 1 à 18, comprenant deux miroirs ésonnants (37,39) en plus du rétro-réflecteur à trois surfaces (29), les deux miroirs résonnants (37,39) étant montés très près l'un de l'autre sur une plaque commune de base (55) pour donner la stabilité optique.

FIG. I

FIG. 2

FIG. 7

REFLECTANCE

100%

SILVER

s

p

ø̄

50%

s

GOLD

p

ø̄

O

30° ø 60° 90°

ANGLE OF INCIDENCE

## FIG. 3

## FIG. 4

# FIG. 5

### SUBSTRATE REFLECTIVITY
### Rs VS. Rp

# FIG. 6

### REFLECTIVITY VS. ANGLE
### SILVER AT 10.6 MICRONS